# EUROPÄISCHE PATENTSCHRIFT

(11) **EP 0 679 562 B1**
(45) Veröffentlichungstag und Bekanntmachung des Hinweises auf die Patenterteilung: **20.01.1999**
(21) Anmeldenummer: 95106194.4
(22) Anmeldetag: 26.04.1995
(51) Int. Cl.: B62B 3/14, B62B 3/18

(54) **Stapelbarer Einkaufswagen**
Nestable shopping trolley
Chariot d'achat emboîtable

(30) Priorität: 28.04.1994 DE 9407469 U; 05.05.1994 DE 9407470 U
(43) Veröffentlichungstag der Anmeldung: 02.11.1995
(73) Patentinhaber: WANZL METALLWARENFABRIK GMBH, D-89336 Leipheim (DE)
(72) Erfinder: Eberlein, Herbert, D-89347 Bubesheim (DE)

(56) Entgegenhaltungen:
- DE-A- 4 312 392
- DE-U- 8 500 639

## Beschreibung

Die Erfindung betrifft einen stapelbaren Einkaufswagen, mit einem Fahrgestell, mit einem zur Aufnahme von Ware bestimmten Behältnis, mit einer Schiebeeinrichtung und mit einer im rückwärtigen Bereich des Einkaufswagens vorgesehenen Ablage, die zur Aufnahme größerer Gegenstände geeignet ist und die aus einer Abstellfläche und aus einem um eine horizontale Achse schwenkbar gelagerten Anschlag gebildet ist.

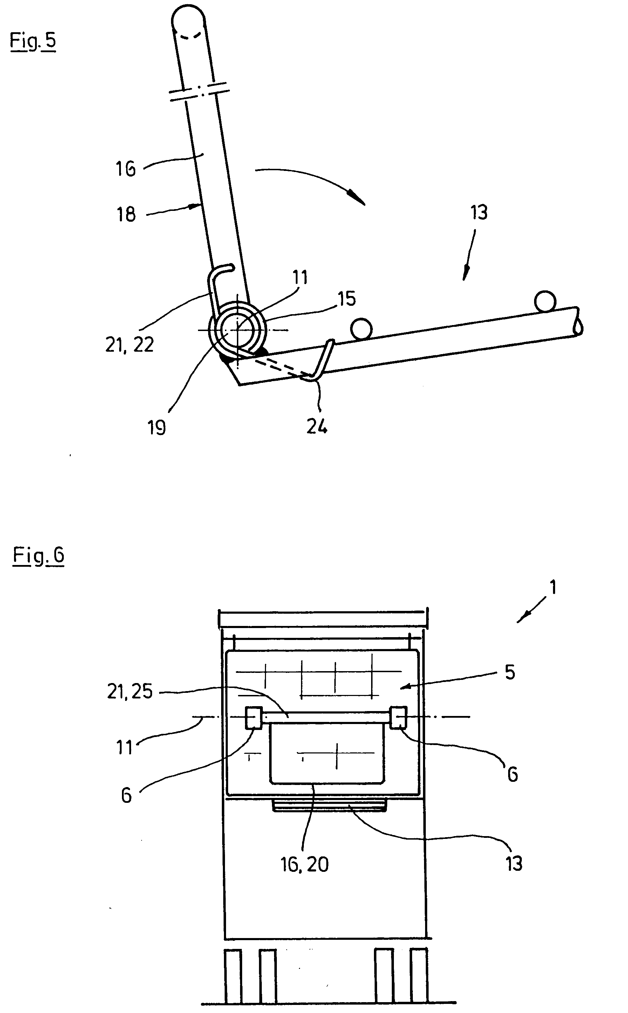

Das deutsche Gebrauchsmuster G 85 00 639.4 beschreibt im Ausführungsbeispiel Fig. 5 einen derartigen Einkaufswagen, bei dem die Ablage so konstruiert ist, daß diese sich ausschließlich für das Abstellen und Transportieren von Getränkekisten eignet. Etwas kleinere Artikel, wie beispielsweise Waschmittelschachteln, schrumpfverpackte Wasserflaschen, Küchentücherrollen usw., lassen sich auf der Ablage des beschiebenen Einkautswagens nicht oder nur sehr schlecht transportieren, da die erwähnten Artikel gegen Herabfallen nicht ausreichend gesichert sind.

Ausgehend von diesem Stand der Technik besteht die Aufgabe der Erfindung darin, einen gattungsgemäßen Einkaufswagen so zu gestalten, daß auf dessen Ablage die vorab genannten kleineren Gegenstände oder Artikel sicher transportiert werden können.

Die Lösung der Aufgabe besteht darin, daß Mittel in Form eines zwischen dein Anschlag und einen, ortsfesten Teil des Einkaufswagens wirksamen Kraftspeichers vorgesehen sind, die auf den Anschlag eine Rückstellkraft ausüben und daß der Anschlag nur gegen die Wirkung dieser Rückstellkraft anhebbar ist.

Bein, Abstellen eines größeren Gegenstandes auf der Ablage, beispielsweise einer Flaschenpackung, braucht der Anschlag gegen die Wirkung der Rückstellkraft nur so weit nach oben geschwenkt zu werden, um den Gegenstand zwischen der Rückwand und dem Anschlag einfügen und auf der Abstellfläche abstellen zu können. Läßt man den Anschlag los, drückt dieser gegen den auf der Ablage befindlichen Gegenstand, so daß dieser gegen Herabfallen gesichert problemlos befördert werden kann.

Die Erfindung wird anhand einiger Ausführungsbeispiele näher erläutert. Es zeigt
- Fig. 1: in räumlicher Darstellung einen Einkaufswagen, auf dessen Ablage eine Flaschenpackung abgestellt ist;
- Fig. 2: einen Einkaufswagen mit einem auf der Ablage befindlichen dicken Gegenstand;
- Fig. 3: den gleichen Einkaufswagen mit einem dünnen Gegenstand beladen;
- Fig. 4: einen weiteren Einkaufswagen sowie
- Fig. 5 und 6: verschiedene Mittel zur Erzeugung der auf einen Anschlag einwirkenden Rückstellkraft.

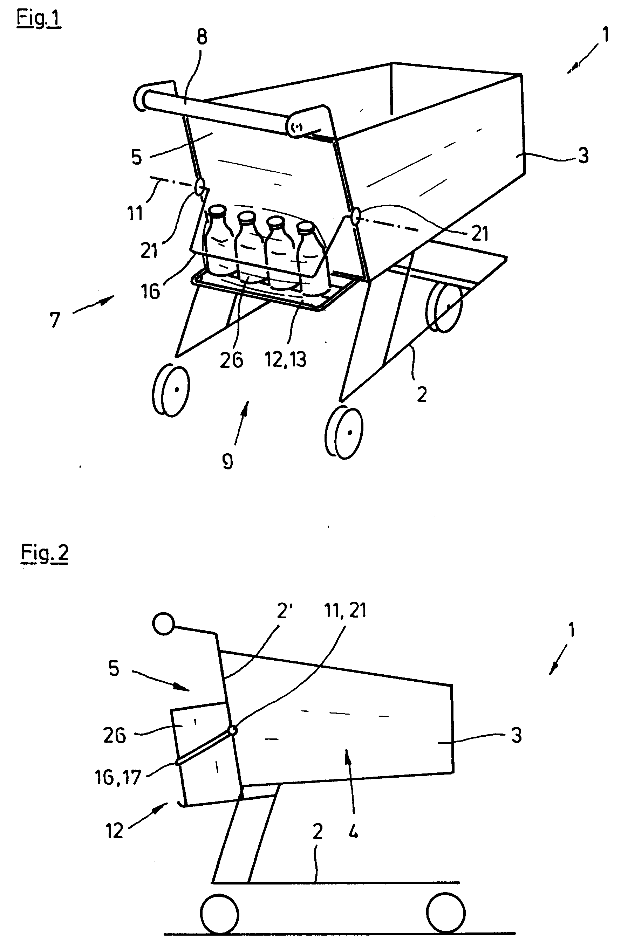

Der in Fig. 1 dargestellte Einkaufswagen 1 steht stellvertretend für die vielen gängigen Einkaufswagen 1, bei denen die Erfindung anwendbar ist. Alle diese Einkaufswagen 1 weisen ein Fahrgestell 2 auf, das ein Behältnis 3 in der bevorzugten Form eines Korbes trägt. Am rückwärtigen Ende 7 des Einkaufswagens 1 ist eine Schiebeeinrichtung 8 vorgesehen, die entweder am Behältnis 3 oder am Fahrgestell 2 angeordnet ist. Die aus Drahtgitter und/oder aus Kunststoff bestehende Rückwand 5 des Behältnisses 3 ist in bekannter Weise um eine oben liegende horizontale Achse verschwenkbar gelagert, damit in ebenfalls bekannter Weise gleiche Einkaufswagen 1 platzsparend ineinandergeschoben werden können. Sowohl das Behältnis 3, als auch das Fahrgestell 2 sind deshalb entsprechend konisch, gewöhnlich in Schieberichtung sich verjüngend, gestaltet. Im rückwärtigen Bereich 9 des Einkaufswagens 1 ist eine Ablage 12 vorgesehen, die zur Aufnahme größerer Gegenstände 26 geeignet ist und die aus einer tiefer als das Behältnis 3 gelegenen ortsfesten Abstellfläche 13 und aus einem um eine horizontale Achse 11 schwenkbar gelagerten Anschlag 16 besteht. Die horizontale Achse 11 erstreckt sich quer zur Schieberichtung des Einkaufswagens 1. Auf der Ablage 12 ist im Beispiel als Gegenstand 26 eine durch vier Wasserflaschen gebildete Schrumpfverpackung abgestellt. Diese Packung ruht auf der Abstellfläche 13 und wird durch den Anschlag 16 so umfaßt, daß sie nicht von der Ablage 12 herabstürzen kann.

Bei dem in Fig. 2 dargestellten Einkaufswagen 1 befindet sich ein relativ dicker, also großvolumiger Gegenstand 26 auf der Ablage 12. Der Anschlag 16 ist bügelförmig gestaltet. Er umfaßt den Gegenstand 26 von drei Seiten. Der Anschlag 16 kann in geeigneter Weise entweder an den Seitenwänden 4 des Behältnisses 3, oder an dessen Rückwand 5 oder an Tragstücken 2', z.B. Holmen, gelagert sein. Die Tragstücke 2' oder Holme sind Bestandteil des Fahrgestelles 2. An ihnen kann das Behältnis 3 befestigt sein. Es sind Mittel 21 vorgesehen,vgl. Fig. 5 und 6, welche eine Kraft auf den Anschlag 16 derart ausüben, daß dieser mit seiner Querverbindung 17 gegen den Gegenstand 26 gedrückt wird und somit den Gegenstand 26 zwischen sich und der Rückwand 5 des Behältnisses 3 einklemmt.

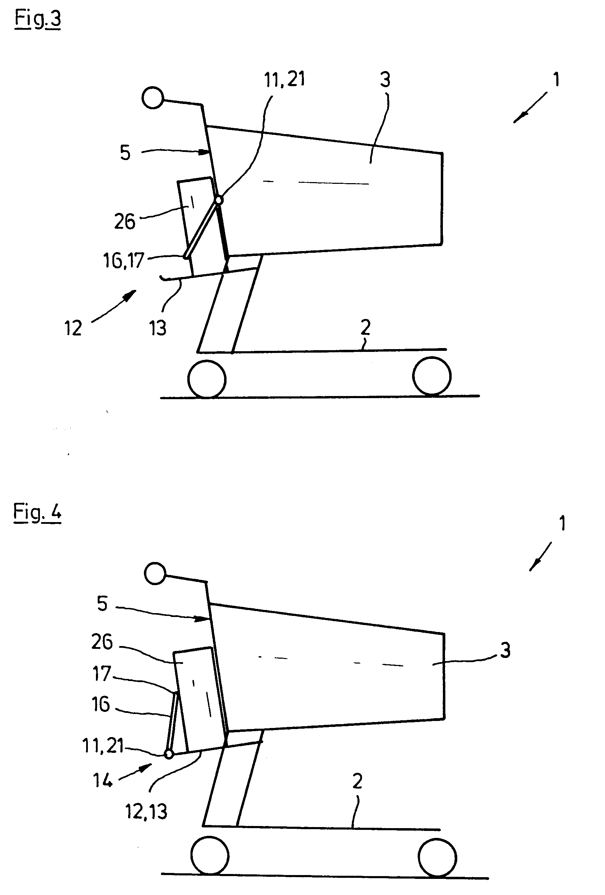

Fig. 3 zeigt den gleichen Einkaufswagen 1, jedoch befindet sich dieses Mal ein relativ dünner Gegenstand 26 auf der Ablage 12. Der bügelförmige Anschlag 16 umfaßt wieder den Gegenstand 26 und drückt ihn mit seiner Querverbindung 17 gegen die Rückwand 5 des Behältnisses 3. Der Gegenstand 26 wird sicher gehalten.

Bei dem in Fig. 4 gezeigten Ausführungsbeispiel ist der Anschlag 16 am hinteren Ende 14 der Abstellfläche 13 vorgesehen und um eine horizontale Achse 11 schwenkbar gelagert. Der Anschlag 16 drückt gegen einen auf der Abstellfläche 13 befindlichen Gegenstand 26 und klemmt ihn mit seiner Querverbindung 17 ebenfalls zwischen sich und der Rückwand 5 des Behältnisses 3 ein.

In Anlehnung an Fig. 4 zeigt Fig. 5 ein Mittel 21, das geeignet ist, eine Kraft auf den Anschlag 16 auszuüben. Die Zeichnung zeigt die Abstellfläche 13 mit einem von zwei Lagern 15, in welchen der Anschlag 16 um die horizontale Achse 11 verschwenkbar gelagert ist. Es ist als Mittel 21 wenigstens eine Drehfeder 22 vorgesehen, die an einem auf der horizontalen Achse 11 befindlichen Abschnitt 19 des Anschlages 16 aufgesteckt und sich mit einem Ende 23 an einem Schenkel 18 des bügelförmigen Anschlages 16 abstützt, während das andere Ende 24 der Drehfeder 22 mit einem Teil der Abstellfläche 13 in Eingriff ist. Die wenigstens eine Drehfeder 22 ist entlang der horizontalen Achse 11 angeordnet. Der in Gebrauchslage dargestellte, in diesem Falle federbelastete Anschlag 16 schwenkt oder schnappt, sobald man ihn losläßt, im Beispiel rechtsdrehend auf die Abstellfläche 13 zu. Befindet sich ein Gegenstand 26 auf der Abstellfläche 13, drückt der Anschlag 16 gegen den Gegenstand 26.

In Anlehnung an Fig. 1 und 2 zeigt Fig. 6 in einer Rückansicht einen Einkaufswagen 1, bei dem der Anschlag 16 an einer aus Kunststoff bestehenden Rückwand 5 verschwenkbar gelagert ist. Das Mittel 21 ist in diesem Falle durch einen entlang der horizontalen Achse 11 sich erstreckenden Torsionsstab 25 mit flachstahlartigem Querschnitt gebildet. Wenigstens ein Ende des Torsionsstabes 25 ist formschlüssig in eine von zwei an der Rückwand 5 angeformten Aufnahmen 6 eingefügt. Die Aufnahmen 6 sind bevorzugt so angeordnet, daß eine Resttorsionskraft vorhanden ist und der Anschlag 16 gegen die Rückwand 5 und damit in seine Nichtgebrauchslage gedrückt wird. Um einen Anschlag 16 zu bilden, ist am Torsionsstab 25 ein bügelförmiger Abschnitt 20 angeordnet. Der so gebildete Anschlag 16 läßt sich im Beispiel um die horizontale Achse 11 aus der Zeichenebene herausschwenken. Dazu muß die Torsionskraft überwunden werden. Läßt man den Anschlag 16 los, schnappt er zurück an die Rückwand 5. Auch ohne zeichnerische Darstellung läßt sich leicht vorstellen, daß sich zwischen einem herausgeschwenkten Anschlag 16 und der Rückwand 5 ein auf der Abstellfläche 13 befindlicher Gegenstand 26 einklemmen läßt.

Es soll nicht unerwähnt bleiben, daß die Erfindung unterschiedlichste Anordnungen insbesondere des Anschlages 16 zuläßt. So kann die horizontale Achse 11, auf der sich der Anschlag 16 verschwenken läßt, beispielsweise mit der Längsachse der Schiebeeinrichtung 8 identisch sein. Die horizontale Achse 11 läßt sich aber auch, wie bereits in Fig. 1 und 2 gezeigt, im Bereich zwischen der Schiebeeinrichtung 8 und der Abstellfläche 13 vorsehen, wobei sie aufgrund einer bevorzugten Bauweise der Einkaufswagen 1 gewöhnlich näher am vorderen Ende des Einkaufswagens 1 angeordnet ist, als das hintere Ende 14 der Abstellfläche 13. Andererseits ist es auch möglich, und wie in Fig. 3 gezeigt, die horizontale Achse 11 am hinteren Ende 14 der Abstellfläche 13 anzuordnen, wobei sie sich entweder auf Höhe der Abstellfläche 13 oder oberhalb oder unterhalb der Abstellfläche 13 plazieren läßt. Je nach Wahl der Ausführung läßt sich der Anschlag 16, betrachtet man einen Einkaufswagen 1 immer von der gleichen Seite, rechtsdrehend oder linksdrehend verschwenken, vgl. Fig. 1 und 4. Die Abstellfläche 13 kann ferner entweder nach hinten leicht abfallend oder horizontal angeordnet sein, wobei sie gewöhnlich tiefer als das Behältnis 3 angeordnet ist. Bei den Mitteln 21 (Drehfeder 22, Torsionsstab 25) handelt es sich im Grunde uni Kraftspeicher, die permanent eine Kraft auf den Anschlag 16 derart einwirken lassen, daß dieser bestrebt ist, sich um die horizontale Achse 11 in Richtung Nichtgebrauchslage zu verschwenken. Die wahlweise an den genannten Stellen 2', 4, 5 13 einsetzbaren Mittel 21 sind immer auf Höhe der horizontalen Achse 11 vorgesehen und sowohl mit dem Anschlag 16 als auch mit einem ortsfesten Teil des Einkaufswagens 1 verbunden. Betrachtet man die Zeichnungen nach Fig. 1 und 2, so liegt der Anschlag 16 in Nichtgebrauchslage nach unten gerichtet an der hinteren Begrenzung 10 des Einkaufswagens 1 oder an der Rückwand 5 des Behältnisses 3 an, während bei dem in Fig. 4 gezeigten Ausführungsbeispiel der Anschlag 16 in Nichtgebrauchslage auf der Abstellfläche 13 aufliegt.

Will man einen Gegenstand 26 auf der Abstellfläche 13 abstellen, so muß der Anschlag 16 gegen die Wirkung der durch das oder die Mittel 21 aufgewendeten Rückstellkraft so weit angehoben werden, bis der Gegenstand 26 zwischen Anschlag 16 und Rückwand 5 des Behältnisses 3 paßt und auf der Abstellfläche 13 aufsitzt. Durch Loslassen des Anschlages 16 will dieser zurück in seine Nichtgebrauchslage. Der Gegenstand 26 hindert ihn jedoch daran. Der Anschlag 16 drückt somit gegen den Gegenstand 26 und klemmt diesen gegen die Rückwand 5. Zum Abnehmen des Gegenstandes 26 von der Ablage 12 braucht der Anschlag 16 nur vom Gegenstand 26 weggeschwenkt werden, so daß sich dieser von der Abstellfläche 13 entfernen läßt.

## Patentansprüche

1. Stapelbarer Einkaufswagen (1), mit einem Fahrgestell (2), mit einem zur Aufnahme von Ware bestimmten Behältnis (3), mit einer Schiebeeinrichtung (8) und mit einer im rückwärtigen Bereich (9) des Einkaufswagens (1) vorgesehenen Ablage (12), die zur Aufnahme größerer Gegenstände (26) geeignet ist und die aus einer Abstellfläche (13) und aus einem um eine horizontale Achse (11) schwenkbar gelagerten Anschlag (16) gebildet ist, dadurch **gekennzeichnet**, daß Mittel (21) in Form eines zwischen dem Anschlag (16) und einem ortsfesten Teil des Einkaufswagens (1) wirksamen Kraftspeichers (21, 22, 25) vorgesehen sind, die auf den Anschlag (16) eine Rückstellkraft ausüben und daß der Anschlag (16) nur gegen die Wirkung dieser Rückstellkraft anhebbar ist.

2. Stapelbarer Einkaufswagen nach Anspruch 1, dadurch **gekennzeichnet**, daß die Mittel (21) zusätzlich dazu bestimmt sind, den Anschlag (16) in Gebrauchslage gegen einen auf der Abstellfläche (13) befindlichen Gegenstand (26) zu drücken.

3. Stapelbarer Einkaufswagen nach Anspruch 1 oder 2, dadurch **gekennzeichnet**, daß die Mittel (21) entlang der horizontalen Achse (11) angeordnet und sowohl mit dem Anschlag (16) als auch mit einem ortsfesten Teil des Einkaufswagens (1) verbunden sind.

4. Stapelbarer Einkaufswagen nach einen, der Ansprüche 1 bis 3, dadurch **gekennzeichnet**, daß die Mittel (21) durch wenigstens eine Drehfeder (22) oder durch einen Torsionsstab (25) gebildet sind.

5. Stapelbarer Einkaufswagen nach einem der Ansprüche 1 bis 4, dadurch **gekennzeichnet**, daß der Torsionsstab (25) Bestandteil des Anschlages (16) ist.

6. Stapelbarer Einkaufswagen nach einem der Ansprüche 1 bis 5, dadurch **gekennzeichnet,** daß in Gebrauchslage des Anschlages (16) ein auf der Abstellfläche (13) befindlicher Gegenstand (26) zwischen dem Anschlag (16) und der Rückwand (5) des Behältnisses (3) eingeklemmt ist.

7. Stapelbarer Einkaufswagen nach einem der Ansprüche 1 bis 6, dadurch **gekennzeichnet,** daß die Querverbindung (17) des Anschlages (16) zum Einklemmen eines Gegenstandes (26) bestimmt ist.

## Claims

1. A stackable shopping trolley (1) comprising a wheel frame (2), a receptacle (3) for holding goods, a pushing arrangement (8) and a shelf (12) which is provided in the rear region (9) of the shopping trolley (1), is suitable for holding relatively large objects (26) and comprises a deposit surface (13) and a stop (16) mounted so as to be pivotable about a horizontal axis (11), characterised in that means (21) are provided in the form of an energy accumulator (21, 22, 25) acting between the stop (16) and the fixed part of the shopping trolley (1) and exerting a restoring force on the stop (16), and in that the stop (16) is only raisable against the action of this restoring force.

2. A stackable shopping trolley according to claim 1, characterised in that the means (21) are additionally provided for pressing the stop (16) against an object (26) placed on the deposit surface (13) when the stop (16) is in the position of use.

3. A stackable shopping trolley according to claim 1 or 2, characterised in that the means (21) are arranged along the horizontal axis (11) and are connected both to the stop (16) and to a fixed part of the shopping trolley (1).

4. A stackable shopping trolley according to any one of claims 1 to 3, characterised in that the means (21) are formed by at least one torsion spring (22) or by a torsion rod (25).

5. A stackable shopping trolley according to any one of claims 1 to 4, characterised in that the torsion rod (25) is a component of the stop (16).

6. A stackable shopping trolley according to any one of claims 1 to 5, characterised in that, when the stop (16) is in the position of use, an object (26) placed on the deposit surface (13) is clamped between the stop (16) and the rear wall (5) of the receptacle (3).

7. A stackable shopping trolley according to any one of claims 1 to 6, characterised in that the cross connection (17) of the stop (16) is provided for clamping an object (26).

## Revendications

1. Chariot à provisions emboîtable (1), avec un châssis (2), avec un récipient (3) destiné à recevoir des marchandises, avec un dispositif de poussée (8) et avec un casier (12), qui est prévu dans la région arrière (9) du chariot à provisions (1), qui convient pour recevoir des objets (26) de relativement grande taille, et qui est constitué d'une surface de rangement (13) et d'une butée (16) montée à pivotement autour d'un axe horizontal (11), **caractérisé** en ce que des moyens (21) exerçant une force de rappel sur la butée (16) sont prévus sous la forme d'un accumulateur de force (21, 22, 25) agissant entre la butée (16) et une partie fixe du chariot à provisions (1), et en ce que la butée (16) ne peut être relevée que contre l'action de cette force de rappel.

2. Chariot à provisions emboîtable selon la revendication 1, **caractérisé** en ce que les moyens (21) sont destinés en outre à presser la butée (16), en position d'utilisation, contre un objet (26) se trouvant sur la surface de rangement (13).

3. Chariot à provisions emboîtable selon la revendication 1 ou 2, **caractérisé** en ce que les moyens (21) sont disposés le long de l'axe horizontal (11) et sont reliés tant à la butée (16) qu'à une partie fixe du chariot à provisions (1).

4. Chariot à provisions emboîtable selon une des revendications 1 à 3, **caractérisé** en ce que les moyens (21) sont formés par au moins un ressort de torsion (22) ou par une barre de torsion (25).

5. Chariot à provisions emboîtable selon une des revendications 1 à 4, **caractérisé** en ce que la barre de torsion (25) fait partie de la butée (16).

6. Chariot à provisions emboîtable selon une des revendications 1 à 5, **caractérisé** en ce que, dans la position d'utilisation de la butée (16), un objet (26) se trouvant sur la surface de rangement (13) est coincé entre la butée (16) et la cloison arrière (5) du récipient (3).

7. Chariot à provisions emboîtable selon une des revendications 1 à 6, **caractérisé** en ce que la partie de liaison transversale (17) de la butée (16) est destinée à coincer un objet (26).
